# EUROPÄISCHE PATENTSCHRIFT

(11) **EP 3 899 480 B1**
(45) Veröffentlichungstag und Bekanntmachung des Hinweises auf die Patenterteilung: **10.01.2024**
(21) Anmeldenummer: 19828198.2
(22) Anmeldetag: 20.11.2019
(51) Int. Cl.: G01M 13/04

(54) **PRÜFSTAND UND VERFAHREN ZUM PRÜFEN EINES LAGERS**
TEST STAND AND METHOD FOR TESTING A BEARING
BANC D'ESSAI ET PROCÉDÉ DE VÉRIFICATION D'UN PALIER

(30) Priorität: 18.12.2018 DE 102018132582
(43) Veröffentlichungstag der Anmeldung: 27.10.2021
(73) Patentinhaber: Schaeffler Technologies AG & Co. KG, 91074 Herzogenaurach (DE)
(72) Erfinder: STAUDIGEL, Andreas, 97421 Schweinfurt (DE); REICHELT, Hermann, 97725 Elfershausen (DE); KÖNIG, Klaus, 97440 Mühlhausen (DE)
(86) Internationale Anmeldenummer: PCT/DE2019/100994
(87) Internationale Veröffentlichungsnummer: WO 2020/125849

(56) Entgegenhaltungen:
- DE-A1-102006 008 176
- DE-A1-102008 048 131

## Beschreibung

Die Erfindung betrifft einen Prüfstand sowie ein Verfahren, mit dessen Hilfe ein Lager geprüft werden kann, insbesondere soll bei einem Radlager eines Kraftfahrzeugs eine bei einer bestimmten Prüfkraft auftretende Reibung ermittelt werden können.

Aus DE 197 13 998 A1 ist ein Prüfstand zum Ermitteln einer Lebensdauer von Radlagern eines Kraftfahrzeugs bekannt, bei dem das zu prüfende Radlager in einem hydrostatischen Axial-/Radial-Gleitlager aufgenommen ist, über das eine Prüfkraft eingeleitet werden kann. Über einer Regelung eines Fluidstroms zum hydrostatischen Axial-/Radial-Gleitlager kann eine Verlustleistung des hydrostatischen Axial-/Radial-Gleitlager minimiert werden.

Die DE 10 2008 048 131 A1 beschreibt eine Radlager-Messeinrichtung und ein Verfahren zur Messung einer Reibkraft. Dabei wird der Einsatz eines verschwenkbar um eine Querachse angeordneten Hebelkörpers vorgeschlagen, welcher Biegeverformungen eines Abstützkörpers des Radlagers ohne Verfälschung der Ausgangssignale von Sensoren ermöglicht.

Die DE 10 2006 008 176 A1 offenbart eine Lageranordnung mit mindestens einem Drei- oder Mehrringlager und ein Verfahren zur Überwachung einer solchen Lageranordnung.

Es besteht ein ständiges Bedürfnis die Prüfung von Lagern möglichst kostengünstig und einfach durchführen zu können.

Es ist die Aufgabe der Erfindung Maßnahmen aufzuzeigen, die eine kostengünstige und einfache Prüfung von Lagern ermöglichen.

Die Lösung der Aufgabe erfolgt erfindungsgemäß durch einen Prüfstand mit den Merkmalen des Anspruchs 1 sowie ein Verfahren mit den Merkmalen des Anspruchs 9. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Prüfstand zum Prüfen eines Lagers, insbesondere Radlager eines Kraftfahrzeugs, vorgesehen mit einem drehbaren Antriebsflansch zum Antreiben eines, insbesondere als Innenring ausgestalteten, ersten Lagerrings des zu prüfenden Lagers und einem Haltelager zum Lagern des zu prüfenden Lagers und zum Einleiten einer Prüfkraft in das zu prüfende Lager, wobei das Haltelager als Dreiringlager mit einem mit einem relativ zum ersten Lagerring verdrehbaren, insbesondere als Außenring ausgestalteten, zweiten Lagerring des zu prüfenden Lagers befestigbaren ersten Stützring, einem drehfest festgehaltenen zweiten Stützring und einem zwischen dem ersten Stützring und dem zweiten Stützring relativ verdrehbar gelagerten Zwischenring ausgestaltet ist und der Zwischenring mit einem Antriebsmotor zum Verdrehen des Zwischenrings relativ zu dem ersten Stützring und dem zweiten Stützring gekoppelt ist.

Im Vergleich zu einem hydrostatisch oder hydrodynamischen Gleitlager ist das Dreiringlager kostengünstiger und robuster. Eine Regelung eines Öldrucks zwischen dem ersten Stützring und dem zweiten Stützring kann dadurch vermieden und eingespart werden. Durch den mit Hilfe des Antriebsmotors verdrehbaren Zwischenring kann zudem eine das Messergebnis möglicherweise verfälschende Reibung des Dreiringlagers minimiert werden. Der Antriebsmotor kann den Zwischenring mit einer Winkelgeschwindigkeit verdrehen, bei welcher eine Haftreibung zwischen dem Zwischenring und den Stützringen beziehungsweise zwischengeschalteten Wälzkörpern überwunden ist. Insbesondere kann der Zwischenring mit einer Winkelgeschwindigkeit verdreht werden, bei welcher der Zwischenring im Übergangsbereich zwischen Mischreibung und Flüssigkeitsreibung betrieben wird, insbesondere in der Nähe des Ausklinkpunkts, der dem Minimum der Stribeck-Kurve entspricht. Ein von dem Dreiringlager aufgeprägtes Reibmoment kann dadurch auf ein so geringes Niveau abgesenkt werden, dass eine Beeinträchtigung der Messung einer Reibungskraft und/oder eines Reibmoments des zu prüfenden Lagers bei einer bestimmten Prüfkraft nicht beeinträchtigt wird. Die Reibungskraft des Dreipunktlagers ist dadurch so gering, dass eine gemessene Kraft als eine Superposition der Reibungskraft des Dreipunktlagers und der Reibungskraft des zu messenden Lagers in zulässiger Weise aufgefasst werden darf. Dadurch kann ein verbliebenes Reibmoment des Dreipunktlagers nachträglich herausgerechnet werden. Hierbei wird die Erkenntnis ausgenutzt, dass eine Reibungskraft des Zwischenrings je nach Drehrichtung des Zwischenrings in unterschiedliche Tangentialrichtungen weist, während eine Reibungskraft des zu prüfenden Lagers bei einer vorgegebenen Drehrichtung des Antriebsflanschs unabhängig von der aktuellen Drehrichtung des Zwischenrings in die selbe Tangentialrichtung weist. Wenn an dem zweiten Lagerring eine Kraftmessung einmal bei einer Drehrichtung des Zwischenrings in eine erste Umfangsrichtung und ein anders Mal bei einer Drehrichtung des Zwischenrings in eine entgegengesetzte zweite Umfangsrichtung erfolgt, können die gemessen Kräfte addiert werden, so dass die Reibungskräfte des Zwischenrings sich gegenseitig aufheben und lediglich die doppelte Reibungskraft des zu prüfenden Lagers verbleibt. Die zu messende Reibungskraft des zu prüfenden Lagers ergibt sich dadurch sehr einfach aus dem Mittelwert der beiden bei unterschiedlichen Drehrichtungen des Zwischenrings gemessen Kräfte. Durch den in unterschiedliche Richtungen verdrehbaren Zwischenring kann bei einem einfachen und robusten Aufbau sehr einfach eine bei einer bestimmten Prüfkraft auftretende Reibung des zu prüfenden Lagers ermittelt werden, so dass eine kostengünstige und einfache Prüfung von Lagern ermöglicht ist.

Ein geeignetes Dreiringlager ist beispielsweise in DE 10 2007 040 029 A1 dargestellt. Der Prüfstand kann im Übrigen wie in DE 197 13 998 A1 dargestellt aus- und weitergebildet sein, auf deren Inhalt als Teil der Erfindung hiermit Bezug genommen wird.

Insbesondere ist vorgesehen, dass ein, insbesondere als Kraftmessdose ausgestalteter, Kraftmesser mit einer zu einer Drehachse des Antriebsflanschs radial versetzten Kraftrichtung im Wesentlichen in tangentialer Richtung an dem zweiten Lagerring angreift. Der Kraftmesser kann direkt oder indirekt, insbesondere über den ersten Stützring und/oder ein mit dem ersten Stützring verbundenes Zwischenstück oder Adapterstück, an dem zweiten Lagerring angreifen. Der Kraftmesser kann dadurch eine bei der aufgeprägten Prüfkraft auftretende Reibungskraft des zu prüfenden Lagers messen. Eine diese Reibungskraft überlagernde Reibungskraft zwischen dem ersten Stützring und dem Zwischenring wird vom Kraftmesser als Teil der gemessenen Kraft zwar auch erfasst, wobei diese Reibungskraft bei einer erneuten Messung, wenn der Zwischenring in der entgegengesetzten Richtung dreht, und der Berücksichtigung beider Messwerte bei der Berechnung der Reibungskraft des zu prüfenden Lagers automatisch herausfällt.

Vorzugsweise ist die Kraftrichtung des Kraftmessers im Wesentlichen senkrecht zu einer an dem zweiten Stützring einleitbaren Prüfkraft ausgerichtet. Ein Einfluss der Prüfkraft auf die vom Kraftmesser gemessene Messkraft kann dadurch vermieden werden.

Besonders bevorzugt ist der Antriebsmotor ausgestaltet den Zwischenring in beide Umfangsrichtungen zu verdrehen. Der Antriebsmotor ist insbesondere als Drehstrommotor ausgestaltet, bei dem die Drehrichtung durch ein Vertauschen von zwei Phasen erreicht werden kann, beispielsweise mit Hilfe eines Wendeschalters. Ein Wechsel der Drehrichtung des Zwischenrings kann somit durch einen Wechsel der Drehrichtung des Antriebsmotors erreicht werden, so dass es nicht erforderlich ist, in der Ankoppelung des Antriebsmotors mit dem Zwischenring eine Änderung zum Wechseln der Drehrichtung vorzunehmen. Eine Messung bei unterschiedlichen Drehrichtungen des Zwischenrings kann dadurch einfach und kostengünstig umgesetzt werden.

Insbesondere ist der zweite Stützring mit einem Prüfrahmen zur Einleitung einer Prüfkraft drehfest befestigt, wobei insbesondere der Prüfrahmen zum Aufprägen einer, insbesondere einer Aufstandskraft entsprechenden, vertikalen Prüfkraft und/oder zum Aufprägen einer, insbesondere einer Längskraft entsprechenden, horizontalen Prüfkraft und/oder zum Aufprägen einer, insbesondere einer Seitenkraft entsprechenden, axialen Prüfkraft ausgestaltet ist. Der Prüfrahmen kann beispielsweise mit Hilfe hydraulischer Kolben mit der gewünschten Prüfkraft in der gewünschten Richtung beaufschlagt werden. Die Prüfkraft kann dann über den fest mit dem Prüfrahmen befestigten zweiten Stützring, den Zwischenring und den ersten Stützring auf das zu prüfende Lager einwirken. Eine Einleitung der Prüfkraft auf den Antriebsflansch, was gegebenenfalls zu einer zusätzlichen Unwucht führen könnte, ist dadurch vermieden.

Vorzugsweise sind der erste Stützring und der zweite Stützring über, insbesondere identisch geformte, Wälzkörper, insbesondere Kugeln, an dem Zwischenring gelagert. Durch die Wälzkörper kann auch ein Gleitreibungskontakt in dem Haltelager minimiert werden. Die bei dem Dreiringlager verbleibende Reibungskraft kann dadurch weiter reduziert werden.

Besonders bevorzugt ist der Antriebsmotor über ein Umschlingungsmittel, insbesondere Flachriemen oder Keilriemen, mit dem Zwischenring gekoppelt. Dadurch ist ein kostengünstiger und einfacher Antrieb des Zwischenrings realisiert. Zudem kann das Umschlingungsmittel großflächig in Umfangsrichtung und/oder in axialer Richtung an dem Zwischenring, insbesondere einem einstückig oder separat ausgeführten Rohrstück oder Riemenscheibe des Zwischenrings, anliegen, so dass die an dem Zwischenring angreifenden Anpresskräfte über einen großen Bereich verteilt werden können. Eine Beeinträchtigung der Kraftmessung beim Prüfen des zu prüfenden Lagers durch die Anbindung des Antriebsmotors und die Einleitung eines Drehmoments in den Zwischenring kann dadurch vermieden oder auf ein zu vernachlässigendes Ausmaß reduziert werden.

Insbesondere weist der erste Stützring ein austauschbares Adapterstück zur Befestigung mit dem zweiten Lagerring auf. Dadurch ist es möglich Lager mit unterschiedlichen Außendurchmessern und/oder Innendurchmessern an dem zweiten Lagerring zu befestigen, indem lediglich das Adapterstück ausgetauscht wird und der übrige Prüfstand größtenteils unverändert bleibt. Der zweite Lagerring kann hierzu einen radial abstehenden Befestigungsflansch aufweisen, an dem das jeweilige Adapterstück angeflanscht werden kann. Zusätzlich oder alternativ weist der Antriebsflansch einen austauschbaren Adapterflansch zur Befestigung mit dem ersten Lagerring auf. Dadurch kann in analoger Weise ein Lager mit unterschiedlichen Außendurchmessern und/oder Innendurchmessern an dem Antriebsflansch befestigt werden, indem lediglich der Adapterflansch ausgetauscht wird und der übrige Prüfstand größtenteils unverändert bleibt.

Die Erfindung betrifft ein Verfahren zum Prüfen eines Lagers, insbesondere Radlager eines Kraftfahrzeugs, mittels eines erfindungsgemäßen Prüfstandes, bei dem das zu prüfende Lager mit dem Antriebsflansch des Prüfstands, der wie vorstehend beschrieben aus- und weitergebildet sein kann, und dem ersten Stützring des Prüfstands befestigt wird, der Antriebsflansch in Drehung versetzt wird, eine, insbesondere über den zweiten Stützring eingeleitete, Prüfkraft auf das zu prüfende Lager aufgeprägt wird, der Zwischenring zur Überwindung von Haftreibung mit dem ersten Stützring und dem zweiten Stützring in eine erste Umfangsrichtung verdreht wird, während der Drehung des Antriebsflanschs und während der Drehung des Zwischenrings in der ersten Umfangsrichtung eine senkrecht zur Kraftrichtung der Prüfkraft wirkende tangentiale erste Messkraft gemessen wird, der Zwischenring zur Überwindung von Haftreibung mit dem ersten Stützring und dem zweiten Stützring in eine der ersten Umfangsrichtung entgegengesetzte zweite Umfangsrichtung verdreht wird, während der Drehung des Antriebsflanschs und während der Drehung des Zwischenrings in der zweiten Umfangsrichtung eine senkrecht zur Kraftrichtung der Prüfkraft wirkende tangentiale zweite Messkraft gemessen wird und aus der ersten Messkraft und der zweiten Messkraft eine Reibungskraft des zu prüfenden Lagers bei der aufgeprägten Prüfkraft berechnet wird. Die Reibungskraft des Zwischenrings weist je nach Drehrichtung des Zwischenrings in unterschiedliche Tangentialrichtungen, während die Reibungskraft des zu prüfenden Lagers bei einer vorgegebenen und sich nicht ändernden Drehrichtung des Antriebsflanschs unabhängig von der aktuellen Drehrichtung des Zwischenrings in die selbe Tangentialrichtung weist. Sobald an dem zweiten Lagerring eine Kraftmessung einmal bei einer Drehrichtung des Zwischenrings in der ersten Umfangsrichtung und ein anders Mal bei einer Drehrichtung des Zwischenrings in die entgegengesetzte zweite Umfangsrichtung erfolgt ist, können die gemessen Kräfte addiert werden, so dass die Reibungskräfte des Zwischenrings sich gegenseitig aufheben und lediglich die doppelte Reibungskraft des zu prüfenden Lagers verbleibt. Die zu messende Reibungskraft des zu prüfenden Lagers berechnet sich dadurch sehr einfach aus dem Mittelwert der beiden bei unterschiedlichen Drehrichtungen des Zwischenrings gemessen Messkräfte. Durch den in unterschiedliche Richtungen verdrehbaren Zwischenring kann bei einem einfachen und robusten Aufbau sehr einfach eine bei einer bestimmten Prüfkraft auftretende Reibung des zu prüfenden Lagers ermittelt werden, so dass eine kostengünstige und einfache Prüfung von Lagern ermöglicht ist.

Vorzugsweise wird das zu prüfende Lager durch ein weiteres zu prüfendes Lager mit einem verschiedenen Innendurchmesser und/oder verschiedenen Außendurchmesser ersetzt, wobei der zweite Lagerring des weiteren zu prüfenden Lagers über ein austauschbares Adapterstück mit dem ersten Stützring und/oder der erste Lagerring des weiteren zu prüfenden Lagers über einen austauschbaren Adapterflansch mit dem Antriebsflansch befestigt wird. Dadurch ist es möglich Lager mit unterschiedlichen Außendurchmessern und/oder Innendurchmessern in dem Prüfstand zu prüfen, wobei lediglich das Adapterstück und/oder der Adapterflansch ausgetauscht wird und der übrige Prüfstand größtenteils unverändert bleibt.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht eines Prüfstands,
Fig. 2: eine schematische Draufsicht auf den Prüfstand aus Fig. 1,
Fig. 3: eine schematische Schnittansicht des Prüfstands aus Fig. 1 und
Fig. 4 eine schematische geschnittene Draufsicht eines Details des Prüfstands aus Fig. 1.

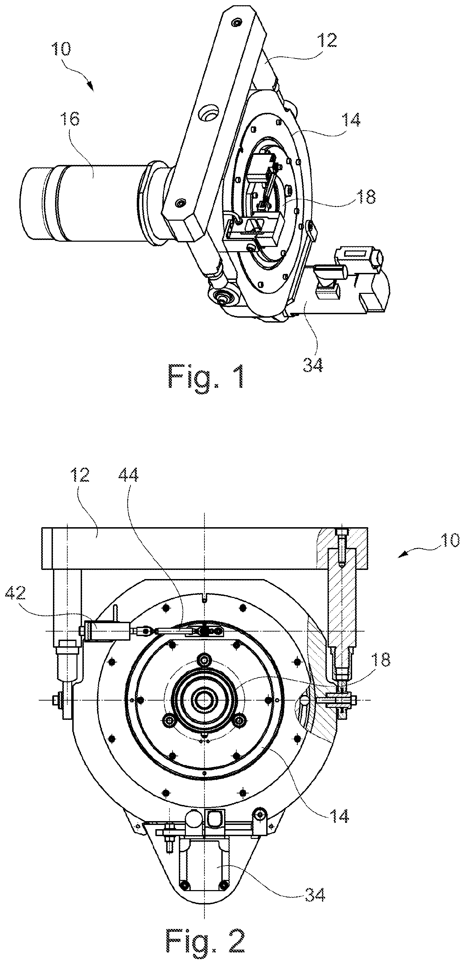

Der in Fig. 1 zu einem Teil dargestellte Prüfstand 10 weist einen in einem nicht dargestellten Gestell bewegbar aufgenommenen Prüfrahmen 12 auf, in den beispielsweise mit Hilfe eines hydraulischen Kolbens eine Prüfkraft eingeleitet werden kann. Der Prüfrahmen 12 ist mit einem als Dreiringlager ausgestalteten Haltelager 14 fest verbunden, in dem ein von einem Elektromotor 16 in Rotation versetzbares zu prüfendes Lager 18 gelagert ist. Das Lager 18 ist beispielsweise ein Radlager eines Rades eines Kraftfahrzeugs. Der Prüfrahmen kann beispielsweise eine in Schwerkraftrichtung weisende Prüfkraft aufprägen, um eine auf das Lager 18 einwirkende Aufstandskraft zu simulieren, wie sie im laufenden Betrieb eines Kraftfahrzeugs auftreten kann.

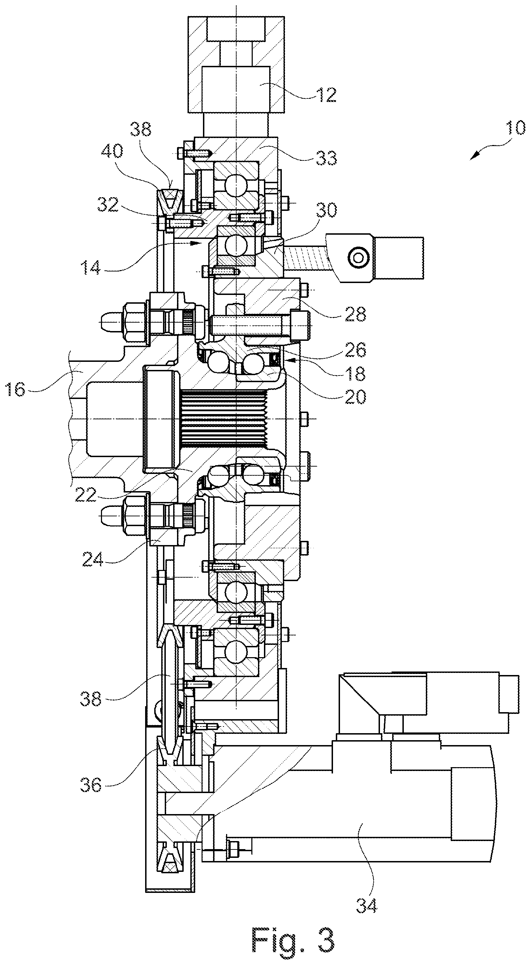

Wie in Fig. 2 und Fig. 3 dargestellt weist das Lager 18 einen als Innenring ausgestalteten ersten Lagerring 20 auf, der über einen austauschbaren Adapterflansch 22 mit einem Antriebsflansch 24 des Elektromotors 16 verbunden ist, damit der Elektromotor 16 den ersten Lagerring 20 zur Messung dynamischer Lasten in Rotation versetzen kann. Das Lager 18 weist außerdem einen als Außenring ausgestalteten zweiten Lagerring 26 auf, der beispielsweise über Kugeln an dem ersten Lagerring 20 gelagert ist. Der zweite Lagerring 26 ist über ein Adapterstück 28 mit einem ersten Stützring 30 des als Dreiringlager ausgestalteten Haltelagers 14 fest verbunden. Der erste Stützring 30 ist über Wälzkörper an einem Zwischenring 32 gelagert, der ebenfalls über Wälzkörper an einem einen Außenring ausbildenden zweiten Stützring 33 gelagert ist. Der zweite Stützring 33 ist drehfest mit dem Prüfrahmen 12 befestigt.

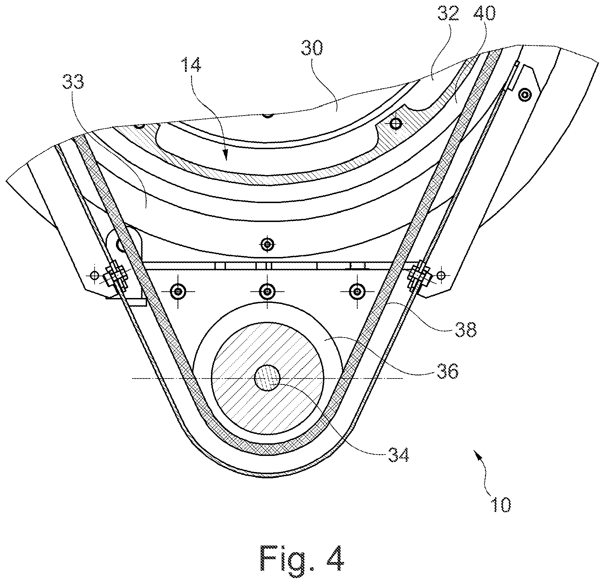

Damit die Reibungskräfte des Haltelagers 14 nicht die Prüfung des Lagers 18 beeinträchtigen, kann der Zwischenring 32 von einem Antriebsmotor 34 in Drehung versetzt werden, so dass zumindest keine Haftreibung an dem Zwischenring 32 angreift. Vorzugsweise wird der Zwischenring 32 mit einer Drehzahl gedreht, bei welcher die Reibung am Zwischenring 32 das Minimum der Stribeck-Kurve im Ausklinkpunkt erreicht. Zum Antrieb des Zwischenrings 32 ist der Antriebsmotor 34 über ein als Riemenscheibe ausgestaltetes Ritzel 36 und ein angreifendes, beispielsweise als Keilriemen, ausgestaltetes Umschlingungsmittel 38 an einer fest mit dem Zwischenring 32 befestigten, als Riemenscheibe ausgestaltete Ausgangscheibe 40 angekoppelt, wie auch in Fig. 4 dargestellt.

An dem Zwischenring 32 ist über einen Hebelarm zu einer Drehachse des Lagers 18 beabstandet ein als Kraftmessdose ausgestalteter Kraftmesser 42 über eine Koppelstange 44 in tangentialer Richtung ausgerichtet angebunden. Der Kraftmesser 42 kann eine Kraft messen, die sich aus der Reibungskraft des Lagers 18 unter der aufgeprägten Prüfkraft und der noch verbliebenen Reibungskraft des Zwischenrings 32 zusammensetzt. Wenn der von dem Antriebsmotor 34 angeriebene Zwischenring 32 und der von dem Elektromotor 16 angetriebene erste Lagerring 20 in dieselbe Umfangsrichtung drehen, addieren sich die von dem Kraftmesser 42 gemessenen Reibungskräfte des Zwischenrings 32 und des Lagers 18. Wenn der von dem Antriebsmotor 34 angeriebene Zwischenring 32 und der von dem Elektromotor 16 angetriebene erste Lagerring 20 in unterschiedliche Umfangsrichtung drehen, sind die Reibungskräfte des Zwischenrings 32 und des Lagers 18 in unterschiedliche Tangentialrichtung gerichtet, so dass der Kraftmesser 42 die Differenz der Reibungskräfte misst. Die Reibungskraft des Lagers 18 kann dadurch einfach als Mittelwert der von dem Kraftmesser 42 gemessenen Messwerte berechnet werden, da sich die in der Höhe nicht bekannten Reibungskräfte des Haltelagers 14 hierbei gegenseitig aufheben.

### Bezugszeichenliste

- 10: Prüfstand
- 12: Prüfrahmen
- 14: Haltelager
- 16: Elektromotor
- 18: Lager
- 20: erster Lagerring
- 22: Adapterflansch
- 24: Antriebsflansch
- 26: zweiter Lagerring
- 28: Adapterstück
- 30: erster Stützring
- 32: Zwischenring
- 33: zweiter Stützring
- 34: Antriebsmotor
- 36: Ritzel
- 38: Umschlingungsmittel
- 40: Ausgangscheibe
- 42: Kraftmesser
- 44: Koppelstange

## Patentansprüche

1. Prüfstand (10) zum Prüfen eines Lagers (18), insbesondere Radlagers eines Kraftfahrzeugs, mit
einem drehbaren Antriebsflansch (24) zum Antreiben eines, insbesondere als Innenring ausgestalteten, ersten Lagerrings (20) des zu prüfenden Lagers (18) und
einem Haltelager (14) zum Lagern des zu prüfenden Lagers (18) und zum Einleiten einer Prüfkraft in das zu prüfende Lager (18),
**dadurch gekennzeichnet, dass**
das Haltelager (14) als Dreiringlager mit
einem mit einem relativ zum ersten Lagerring (20) verdrehbaren, insbesondere als Außenring ausgestalteten, zweiten Lagerring (26) des zu prüfenden Lagers (18) befestigbaren ersten Stützring (30),
einem drehfest festgehaltenen zweiten Stützring (33) und
einem zwischen dem ersten Stützring (30) und dem zweiten Stützring (33) relativ verdrehbar gelagerten Zwischenring (32)
ausgestaltet ist und
der Zwischenring (32) mit einem Antriebsmotor (34) zum Verdrehen des Zwischenrings (32) relativ zu dem ersten Stützring (30) und dem zweiten Stützring (33) gekoppelt ist.

2. Prüfstand (10) nach Anspruch 1 **dadurch gekennzeichnet, dass** ein, insbesondere als Kraftmessdose ausgestalteter, Kraftmesser (42) mit einer zu einer Drehachse des Antriebsflanschs (24) radial versetzten Kraftrichtung im Wesentlichen in tangentialer Richtung an dem zweiten Lagerring (26) angreift.

3. Prüfstand (10) nach Anspruch 2 **dadurch gekennzeichnet, dass** die Kraftrichtung des Kraftmessers (42) im Wesentlichen senkrecht zu einer an dem zweiten Stützring (33) einleitbaren Prüfkraft ausgerichtet ist.

4. Prüfstand (10) nach einem der Ansprüche 1 bis 3 **dadurch gekennzeichnet, dass** der Antriebsmotor (34) ausgestaltet ist den Zwischenring (32) in beide Umfangsrichtungen zu verdrehen.

5. Prüfstand (10) nach einem der Ansprüche 1 bis 4 **dadurch gekennzeichnet, dass** der zweite Stützring (33) mit einem Prüfrahmen (12) zur Einleitung einer Prüfkraft drehfest befestigt ist, wobei insbesondere der Prüfrahmen (12) zum Aufprägen einer, insbesondere einer Aufstandskraft entsprechenden, vertikalen Prüfkraft und/oder zum Aufprägen einer, insbesondere einer Längskraft entsprechenden, horizontalen Prüfkraft und/oder zum Aufprägen einer, insbesondere einer Seitenkraft entsprechenden, axialen Prüfkraft ausgestaltet ist.

6. Prüfstand (10) nach einem der Ansprüche 1 bis 5 **dadurch gekennzeichnet, dass** der erste Stützring (30) und der zweite Stützring (33) über, insbesondere identisch geformte, Wälzkörper, insbesondere Kugeln, an dem Zwischenring (32) gelagert sind.

7. Prüfstand (10) nach einem der Ansprüche 1 bis 6 **dadurch gekennzeichnet, dass** der Antriebsmotor (34) über ein Umschlingungsmittel (38), insbesondere Flachriemen oder Keilriemen, mit dem Zwischenring (32) gekoppelt ist.

8. Prüfstand (10) nach einem der Ansprüche 1 bis 7 **dadurch gekennzeichnet, dass** der erste Stützring (30) ein austauschbares Adapterstück (28) zur Befestigung mit dem zweiten Lagerring (26) aufweist.

9. Verfahren zum Prüfen eines Lagers (18), insbesondere Radlagers eines Kraftfahrzeugs, mittels eines Prüfstandes (10) nach einem der Ansprüche 1 bis 8, bei dem das zu prüfende Lager (18) mit dem Antriebsflansch (24) des Prüfstands (10) und dem ersten Stützring (30) des Prüfstands (10) befestigt wird,
der Antriebsflansch (24) in Drehung versetzt wird,
eine, insbesondere über den zweiten Stützring (33) eingeleitete, Prüfkraft auf das zu prüfende Lager (18) aufgeprägt wird,
der Zwischenring (32) zur Überwindung von Haftreibung mit dem ersten Stützring (30) und dem zweiten Stützring (33) in eine erste Umfangsrichtung verdreht wird,
während der Drehung des Antriebsflanschs (24) und während der Drehung des Zwischenrings (32) in der ersten Umfangsrichtung eine senkrecht zur Kraftrichtung der Prüfkraft wirkende tangentiale erste Messkraft gemessen wird,
der Zwischenring (32) zur Überwindung von Haftreibung mit dem ersten Stützring (30) und dem zweiten Stützring (33) in eine der ersten Umfangsrichtung entgegengesetzte zweite Umfangsrichtung verdreht wird,
während der Drehung des Antriebsflanschs (24) und während der Drehung des Zwischenrings (32) in der zweiten Umfangsrichtung eine senkrecht zur Kraftrichtung der Prüfkraft wirkende tangentiale zweite Messkraft gemessen wird und
aus der ersten Messkraft und der zweiten Messkraft eine Reibungskraft des zu prüfenden Lagers (18) bei der aufgeprägten Prüfkraft berechnet wird.

10. Verfahren nach Anspruch 9 **dadurch gekennzeichnet, dass** das zu prüfende Lager (18) durch ein weiteres zu prüfendes Lager mit einem verschiedenen Innendurchmesser und/oder verschiedenen Außendurchmesser ersetzt wird, wobei der zweite Lagerring (26) des weiteren zu prüfenden Lagers über ein austauschbares Adapterstück (28) mit dem ersten Stützring (30) und/oder der erste Lagerring (20) des weiteren zu prüfenden Lagers über einen austauschbaren Adapterflansch (22) mit dem Antriebsflansch (24) befestigt wird.

## Claims

1. A test stand (10) for testing a bearing (18), in particular a wheel bearing of a motor vehicle, having
a rotatable drive flange (24) for driving a first bearing ring (20), in particular designed as an inner ring, of the bearing (18) to be tested and
a holding bearing (14) for supporting the bearing (18) to be tested and for introducing a testing force into the bearing (18) to be tested,
**characterised in that**
the holding bearing (14) is designed as a three-ring bearing having
a first support ring (30) which can be fastened to a second bearing ring (26) of the bearing (18) to be tested, said second bearing ring being rotatable relative to the first bearing ring (20), in particular designed as an outer ring,
a second support ring (33) which is secured in a rotationally fixed manner, and
an intermediate ring (32) which is mounted between the first support ring (30) and the second support ring (33) in a relatively rotatable manner,
and
the intermediate ring (32) is coupled to a drive motor (34) in order to rotate the intermediate ring (32) relative to the first support ring (30) and the second support ring (33).

2. The test stand (10) according to claim 1, **characterised in that** a dynamometer (42), in particular designed as a load cell, having a force direction radially offset from a rotational axis of the drive flange (24) acts on the second bearing ring (26) in a substantially tangential direction.

3. The test stand (10) according to claim 2, **characterised in that** the force direction of the dynamometer (42) is oriented substantially perpendicular to the testing force that can be introduced on the second support ring (33).

4. The test stand (10) according to any one of claims 1 to 3, **characterised in that** the drive motor (34) is designed to rotate the intermediate ring (32) in both circumferential directions.

5. The test stand (10) according to any one of claims 1 to 4, **characterised in that** the second support ring (33) is fastened to a test frame (12) in a rotationally fixed manner for introducing a testing force, wherein in particular the test frame (12) is designed to apply a vertical testing force, in particular corresponding to a contact force, and/or to apply a horizontal testing force, in particular corresponding to a longitudinal force, and/or to apply an axial testing force, in particular corresponding to a lateral force.

6. The test stand (10) according to any one of claims 1 to 5, **characterised in that** the first support ring (30) and the second support ring (33) are mounted on the intermediate ring (32) via, in particular, identically shaped rolling elements, in particular spheres.

7. The test stand (10) according to any one of claims 1 to 6, **characterised in that** the drive motor (34) is coupled to the intermediate ring (32) via a belt means (38), in particular a flat belt or V-belt.

8. The test stand (10) according to any one of claims 1 to 7, **characterised in that** the first support ring (30) has an exchangeable adapter piece (28) for fastening to the second bearing ring (26).

9. A method for testing a bearing (18), in particular a wheel bearing of a motor vehicle, by means of a test stand (10) according to any one of claims 1 to 8, in which
the bearing (18) to be tested is fastened to the drive flange (24) of the test stand (10) and the first support ring (30) of the test stand (10),
the drive flange (24) is rotated,
a testing force, introduced in particular via the second support ring (33), is applied to the bearing (18) to be tested,
the intermediate ring (32) is rotated in a first circumferential direction to overcome static friction with the first support ring (30) and the second support ring (33),
during the rotation of the drive flange (24) and during the rotation of the intermediate ring (32) in the first circumferential direction, a tangential first measuring force acting perpendicular to the force direction of the testing force is measured,
the intermediate ring (32) is rotated in a second circumferential direction opposite the first circumferential direction to overcome static friction with the first support ring (30) and the second support ring (33),
during the rotation of the drive flange (24) and during the rotation of the intermediate ring (32) in the second circumferential direction, a tangential second measuring force acting perpendicular to the force direction of the testing force is measured and
a frictional force of the bearing (18) to be tested is calculated from the first measuring force and the second measuring force at the applied testing force.

10. The method according to claim 9, **characterised in that** the bearing (18) to be tested is replaced by a further bearing to be tested having a different inner diameter and/or different outer diameter, wherein the second bearing ring (26) of the further bearing to be tested is fastened to the first support ring (30) via an exchangeable adapter piece (28) and/or the first bearing ring (20) of the further bearing to be tested is fastened to the drive flange (24) via an exchangeable adapter flange (22).

## Revendications

1. Banc d'essai (10) permettant de mettre à l'essai un palier (18), en particulier un palier de roue d'un véhicule automobile, comportant
une bride d'entraînement (24) rotative permettant d'entraîner une première bague de palier (20), en particulier conçue sous la forme de bague intérieure, du palier (18) à mettre à l'essai et
un palier de maintien (14) permettant de loger le palier (18) à mettre à l'essai et d'introduire une force d'essai dans le palier (18) à mettre à l'essai,
**caractérisé en ce que**
le palier de maintien (14) est conçu sous la forme de palier à trois bagues comportant
une première bague d'appui (30), pouvant être fixée à une seconde bague de palier (26) du palier (18) à mettre à l'essai, laquelle peut tourner par rapport à la première bague de palier (20), en particulier conçue sous la forme de bague extérieure,
une seconde bague d'appui (33) maintenue de manière solidaire en rotation et
une bague intermédiaire (32), entre la première bague d'appui (30) et la seconde bague d'appui (33), montée de manière relativement rotative
et
la bague intermédiaire (32) est accouplée à un moteur d'entraînement (34) pour faire tourner la bague intermédiaire (32) par rapport à la première bague d'appui (30) et à la seconde bague d'appui (33).

2. Banc d'essai (10) selon la revendication 1, **caractérisé en ce qu'**un dynamomètre (42), en particulier conçu sous la forme de cellule de charge, présentant une direction de force décalée radialement par rapport à un axe de rotation de la bride d'entraînement (24), agit essentiellement dans une direction tangentielle sur la seconde bague de palier (26).

3. Banc d'essai (10) selon la revendication 2, **caractérisé en ce que** la direction de force du dynamomètre (42) est orientée essentiellement perpendiculairement à une force d'essai pouvant être introduite sur le seconde bague d'appui (33).

4. Banc d'essai (10) selon l'une quelconque des revendications 1 à 3, **caractérisé en ce que** le moteur d'entraînement (34) est conçu pour faire tourner la bague intermédiaire (32) dans les deux directions circonférentielles.

5. Banc d'essai (10) selon l'une quelconque des revendications 1 à 4, **caractérisé en ce que** la seconde bague d'appui (33) est fixée de manière solidaire en rotation à un cadre d'essai (12) pour introduire une force d'essai, dans lequel, en particulier le cadre d'essai (12) est conçu pour appliquer une force de soulèvement, en particulier correspondant à une force d'essai verticale, et/ou pour appliquer une force d'essai horizontale, en particulier correspondant à une force longitudinale, et/ou pour appliquer une force d'essai axiale, en particulier correspondant à une force latérale.

6. Banc d'essai (10) selon l'une quelconque des revendications 1 à 5, **caractérisé en ce que** la première bague d'appui (30) et la seconde bague d'appui (33) sont montées, au moyen de corps roulants, en particulier de forme identique, en particulier de balles, sur la bague intermédiaire (32).

7. Banc d'essai (10) selon l'une quelconque des revendications 1 à 6, **caractérisé en ce que** le moteur d'entraînement (34) est accouplé à la bague intermédiaire (32) au moyen d'un moyen d'enlacement (38), en particulier d'une courroie plane ou d'une courroie trapézoïdale.

8. Banc d'essai (10) selon l'une quelconque des revendications 1 à 7, **caractérisé en ce que** la première bague d'appui (30) comporte une pièce adaptatrice (28) remplaçable destinée à la fixation à la seconde bague de palier (26).

9. Procédé de mise à l'essai d'un palier (18), en particulier d'un palier de roue d'un véhicule automobile, au moyen d'un banc d'essai (10) selon l'une quelconque des revendications 1 à 8, dans lequel
le palier (18) à mettre à l'essai est fixé sur la bride d'entraînement (24) du banc d'essai (10) et sur la première bague d'appui (30) du banc d'essai (10),
la bride d'entraînement (24) est mise en rotation,
une force d'essai, en particulier introduite par l'intermédiaire de la seconde bague d'appui (33), est appliquée au palier (18) à mettre à l'essai,
la bague intermédiaire (32), pour surmonter le frottement statique avec la première bague d'appui (30) et la seconde bague d'appui (33), est mise en rotation dans une première direction circonférentielle,
lors de la rotation de la bride d'entraînement (24) et lors de la rotation de la bague intermédiaire (32) dans la première direction circonférentielle, une première force de mesure tangentielle, agissant perpendiculairement à la direction de force de la force d'essai, est mesurée,
la bague intermédiaire (32), pour surmonter le frottement statique avec la première bague d'appui (30) et la seconde bague d'appui (33), est mise en rotation dans une seconde direction circonférentielle opposée à la première direction circonférentielle,
lors de la rotation de la bride d'entraînement (24) et lors de la rotation de la bague intermédiaire (32) dans la seconde direction circonférentielle, une seconde force de mesure tangentielle, agissant perpendiculairement à la direction de force de la force d'essai, est mesurée et
en fonction de la première force de mesure et de la seconde force de mesure, une force de frottement du palier (18) à mettre à l'essai est calculée à la force d'essai appliquée.

10. Procédé selon la revendication 9, **caractérisé en ce que** le palier (18) à mettre à l'essai est remplacé par un autre palier à mettre à l'essai présentant un diamètre intérieur différent et/ou un diamètre extérieur différent, dans lequel la seconde bague de palier (26) de l'autre palier à mettre à l'essai est fixée, au moyen d'une pièce adaptatrice (28) remplaçable, à la première bague d'appui (30) et/ou à la première bague de palier (20) de l'autre palier à mettre à l'essai, au moyen d'une bride adaptatrice (22) remplaçable, à la bride d'entraînement (24).
